Europäisches Patentamt

European Patent Office

Office européen des brevets

(19)

(11) Veröffentlichungsnummer: **0 064 628**
**B1**

(12) # EUROPÄISCHE PATENTSCHRIFT

(45) Veröffentlichungstag der Patentschrift:
21.08.85

(51) Int. Cl.⁴: **C 08 F 2/00**, B 01 J 19/00

(21) Anmeldenummer: 82103360.2

(22) Anmeldetag: 21.04.82

(54) Einrichtung zur Notstoppung von Polymerisationsansätzen.

(30) Priorität: 11.05.81 DE 3118803

(43) Veröffentlichungstag der Anmeldung:
17.11.82 Patentblatt 82/46

(45) Bekanntmachung des Hinweises auf die Patenterteilung:
21.08.85 Patentblatt 85/34

(84) Benannte Vertragsstaaten:
AT BE CH DE FR GB IT LI LU NL SE

(56) Entgegenhaltungen:
DE - B - 2 428 705
FR - A - 2 116 147

(73) Patentinhaber: HOECHST AKTIENGESELLSCHAFT,
Postfach 80 03 20, D-6230 Frankfurt am Main 80 (DE)

(72) Erfinder: Komischke, Peter, Klosterstrasse 39,
D-5030 Efferen (DE)
Erfinder: Prell, Lorenz, Dr. Krauss Strasse 9,
D-5030 Hürth (DE)
Erfinder: Scholz, Manfred, Scheilfarts-Weg 31,
D-5354 Wellerswist (DE)

## Beschreibung

Die vorliegende Erfindung betrifft eine Einrichtung zur Notstoppung von Polymerisationsreaktionen in geschlossenen Reaktionsbehältern durch Zugabe von Inhibitorlösung, wobei in eine Öffnung im Reaktionsbehälter eine Berstscheibe eingesetzt ist.

Die Polymerisation von Monomeren wie beispielsweise Styrol oder Vinylchlorid wird diskontinuierlich in mit einem Rührer versehenen Reaktionsbehältern mit einem Fassungsvermögen bis zu 200 m³ durchgeführt. Die bei den exothermen Polymerisationsreaktionen frei werdende Wärme wird, nachdem die monomerenspezifische Reaktionstemperatur erreicht ist, mit Hilfe von Kühlwasser oder Kühlsole abgeführt, welche durch den Kühlmantel des Reaktionsbehälters und durch einen gegebenenfalls auf dem Reaktionsbehälter angeordneten Rückflußkühler gepumpt werden. Fällt die Kühlung während der Polymerisation einer Charge aus, so kommt es zu einem unkontrollierten Temperatur- und Druckanstieg im Reaktionsbehälter.

Um ein Zerbersten des Reaktionsbehälters in einem solchen Falle zu vermeiden, ist es bekannt, neben der Ausrüstung des Reaktionsbehälters mit einem in die Atmosphäre oder eine Fackel entspannenden Sicherheitsventil zwei weitere Sicherheitssysteme vorzusehen; und zwar die Notentspannung und die Notstoppung. Während die Apparatur für die Notentspannung sorgfältig auf die Reaktionsdynamik abgestimmt sein muß und umfangreiche regeltechnische Einrichtungen erfordert, ist als letzte Maßnahme vor der aus Umweltschutzgründen unerwünschten Entspannung durch das Sicherheitsventil die Notstoppung möglich. Hierbei wird eine Chemikalie durch Bodenventile in den Reaktionsbehälter eingedrückt und untergemischt, wodurch die Polymerisationsreaktion augenblicklich unterbrochen wird (vgl. »Chemie-Technik«, 5 (1976), Seiten 137 und 138). Als Chemikalien, welche die Polymerisationsreaktionen schon in kleinen Mengen zum Erliegen bringen, sog. Inhibitoren, sind beispielsweise Hydrochinon oder Butylbrenzkatechin bekannt.

Aus der DE-A-2 158 568 ist ein Autoklav zur Durchführung von Polymerisationsreaktionen, insbesondere zur Herstellung von Homo- und Copolymerisaten des Ethylens, bekannt. Dieser Autoklav ist mit einem seitlichen, zu einem Sicherheitssystem führenden Stutzen versehen, wobei in dem Stutzen eine Berstscheibe angeordnet ist, welche beim Überschreiten eines gewissen Druckes im Reaktor zerbricht, so daß die im Reaktor enthaltenen Gase über das Sicherheitssystem entweichen können.

Bei diesem Autoklaven wird mit Hilfe der Berstscheibe nicht ein »Durchgehen« einer Polymerisationsreaktion verhindert, sondern lediglich das große heiße Gasvolumen, welches sich bereits gebildet hat, weil eine Polymerisationsreaktion außer Kontrolle geraten ist, zur Verhinderung seiner Explosion einem Sicherheitssystem zugeführt.

Nachteilig ist bei der bekannten Einrichtung zur Notstoppung, daß die Bodenventile durch anbackendes Polymerisat blockiert oder mechanisch gehemmt sein können oder daß die Bodenventile, welche aus Sicherheitsgründen fernsteuerbar sein müssen, bei Energieausfall nicht betätigbar sind.

Es ist daher Aufgabe der vorliegenden Erfindung, eine Einrichtung zur Notstoppung von Polymerisationsreaktionen in geschlossenen Reaktionsbehältern durch Zugabe von Inhibitorlösung anzugeben, deren Funktionsfähigkeit unabhängig von Polymerisatanbackungen und Ausfall der Netzenergien gewährleistet ist.

Das wird erfindungsgemäß dadurch erreicht, daß eine einen oberen und einen unteren Flansch aufweisende abgewinkelte Leitung zur Aufnahme der Inhibitorlösung vorgesehen ist; daß sich die Öffnung zum Einsetzen der Berstscheibe im Boden des Reaktionsbehälters befindet; daß der äußere Rand der Berstscheibe und der untere Flansch der Leitung einander berühren und dichtschließend an der Außenseite des Reaktionsbehälters befestigt sind; und daß der obere Flansch der Leitung mit einer Druckgas-Leitung verbunden ist, welche an eine Druckgasquelle angeschlossen ist.

Die Einrichtung gemäß der Erfindung kann wahlweise auch noch dadurch weitergebildet sein, daß

a) die Berstscheibe innenbündig eingesetzt ist,
b) die Berstscheibe aus Metall besteht,
c) die Berstscheibe aus Graphit besteht,
d) die Berstscheibe einem Druck von mindestens 25 bar standhält,
e) die Druckgas-Leitung an das Ventil einer Druckgas-Flasche angeschlossen ist.

Bei der erfindungsgemäßen Einrichtung sind keine Ventile erforderlich, welche durch Polymerisatanbackung oder Festsitzen in ihrer Funktionsfähigkeit gestört sein können.

Am Reaktionsbehälter sind zur Aufnahme der Einrichtung gemäß der Erfindung keine Stutzen erforderlich, welche zupolymerisieren können.

Bei der erfindungsgemäßen Einrichtung sind keine Manipulationen in der Nähe des kritischen Reaktionsbehälters notwendig, weil die Druckgas-Quelle weit entfernt davon, beispielsweise in der Meßwarte, geöffnet werden kann.

Vorteilhaft ist die Verwendung von Druckgas-Flaschen bei der Einrichtung gemäß der Erfindung, weil diese auch bei Störungen im Druckgasnetz funktionsfähig sind. Dabei kann durch entsprechende Wahl von Volumen der Druckgas-Flasche und des in ihr herrschenden Druckes der durch das Druckgas im Reaktionsbehälter bewirkte Druckanstieg begrenzt werden, so daß das Sicherheitsventil am Reaktionsbehälter bei der Notstoppung nicht anspricht.

Bei der erfindungsgemäßen Einrichtung ist eine optimale Verteilung des Inhibitors im Polymerisationsansatz auch bei Rührerausfall durch die extrem hohe Eintrittsgeschwindigkeit des Inhibitors und des nachströmenden Gases in den Reaktionsbehälter gegeben.

Bei der erfindungsgemäßen Einrichtung können als Druckgase Stickstoff, Wasserstoff oder Edelgase verwendet werden.

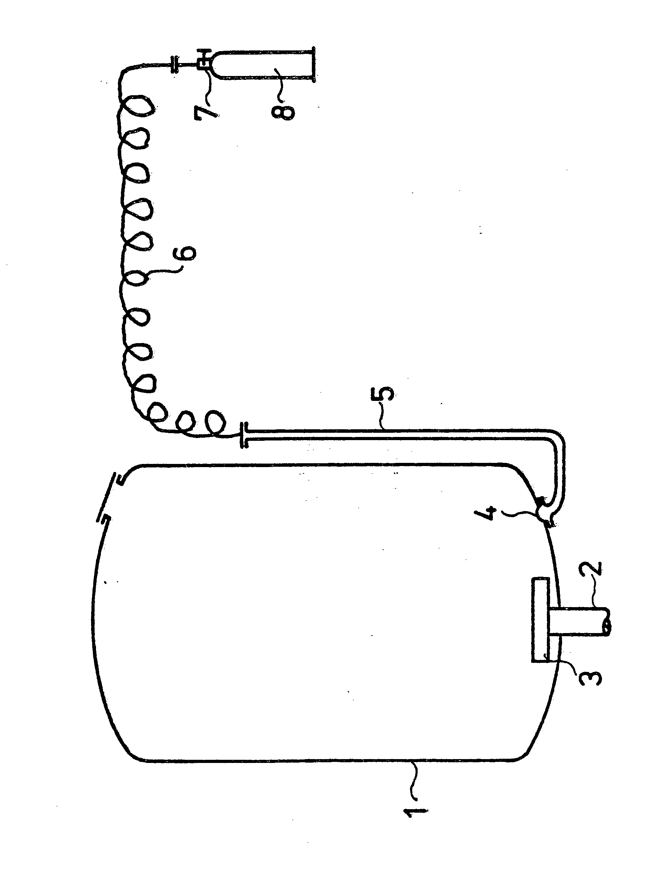

In der Zeichnung ist ein Ausführungsbeispiel des Gegenstandes der Erfindung schematisch dargestellt.

Der Boden eines Reaktionsbehälters 1 ist mittig von einer Rührwelle 2 eines von unten angetriebenen Rührers 3 durchdrungen. In eine seitliche Öffnung im Boden des Reaktionsbehälters 1 ist eine metallische Berstscheibe 4 eingesetzt. Auf der Außenseite des Polymerisationskessels 1 schließt sich an die Berstscheibe 4 das eine Ende einer abgewinkelten Leitung 5 an, welche mit Inhibitorlösung gefüllt ist. In das andere Ende der Leitung 5 mündet eine Druckgas-Leitung 6 ein, welche an das Ventil 7 einer mit Stickstoff gefüllten Druckgas-Flasche 8 angeschlossen ist.

Die Funktionsweise der erfindungsgemäßen Einrichtung sei nunmehr am Beispiel der Polymerisation von Vinylchlorid erläutert.

In den Reaktionsbehälter 1 (25 m³) wurden
14 m³ Wasser,
9 m³ Vinylchlorid,
8 kg teilverseiftes Polyvinylacetat und
5 kg Ethylhexylperoxidikarbonat
eingetragen und die Reaktionsmischung unter Rühren auf 55° erhitzt. Nach Einsetzen der Polymerisationsreaktion wurde die Temperatur von 55° C durch Durchleiten von Kühlwasser durch den Doppelmantel des Reaktionsbehälters 1 aufrechterhalten.

Zur Simulierung eines Kühlwasserausfalles wurde die Kühlwasserzufuhr unterbrochen. Innerhalb von 5 Minuten stieg im Reaktionsbehälter 1 die Temperatur um 5° C und der Druck um 1 bar an. Nun wurde das Ventil 7 der Druckgas-Flasche 8 (Inhalt: 3 l, Druck: 200 bar) voll geöffnet. Der sich in der Leitung 5 und in der Druckgas-Leitung 6 aufbauende Druck zerriß die Berstscheibe 4 bei 40 bar, so daß die Inhibitorlösung mit großer Geschwindigkeit in die Reaktionsmischung eintrat und sich mit ihr vermischte. Der Druck- und Temperaturanstieg im Reaktionsbehälter 1 kam unmittelbar darauf zum Stillstand.

## Patentansprüche

1. Einrichtung zur Notstoppung von Polymerisationsreaktionen in geschlossenen Reaktionsbehältern durch Zugabe von Inhibitorlösung, wobei in eine Öffnung im Reaktionsbehälter eine Berstscheibe eingesetzt ist, dadurch gekennzeichnet, daß eine einen oberen und einen unteren Flansch aufweisende abgewinkelte Leitung (5) zur Aufnahme der Inhibitorlösung vorgesehen ist; daß sich die Öffnung zum Einsetzen der Berstscheibe (4) im Boden des Reaktionsbehälters (1) befindet; daß der äußere Rand der Berstscheibe (4) und der untere Flansch der Leitung (5) einander berühren und dichtschließend an der Außenseite des Reaktionsbehälters (1) befestigt sind; und daß der obere Flansch der Leitung (5) mit einer Druckgas-Leitung (6) verbunden ist, welche an eine Druckgasquelle angeschlossen ist.

2. Einrichtung nach Anspruch 1, dadurch gekennzeichnet, daß die Berstscheibe (4) innenbündig eingesetzt ist.

3. Einrichtung nach Anspruch 1 oder 2, dadurch gekennzeichnet, daß die Berstscheibe (4) aus Metall besteht.

4. Einrichtung nach Anspruch 1 oder 2, dadurch gekennzeichnet, daß die Berstscheibe (4) aus Graphit besteht.

5. Einrichtung nach einem der Ansprüche 1 bis 4, dadurch gekennzeichnet, daß die Berstscheibe (4) einem Druck von mindestens 25 bar standhält.

6. Einrichtung nach einem der Ansprüche 1 bis 5, dadurch gekennzeichnet, daß die Druckgas-Leitung (6) an das Ventil (7) einer Druckgas-Flasche (8) angeschlossen ist.

## Claims

1. Device permitting an emergency stoppage of polymerization reactions in a closed container by the addition of an inhibitor solution, the reactor having a bursting disc installed in an opening provided therein, characterized in that it includes an angled conduit (5) having an upper flange and a lower flange, for receiving the inhibitor solution; in that the opening receiving the bursting disc (4) is provided in the bottom portion of reactor (1); in that the outer rim portion of the bursting disc (4) and lower flange of conduit (5) are in contact with one another and tightly mounted on the outside of reactor (1); and in that the upper flange of conduit (5) is connected to a compressed gas line (6) running to a compressed gas source.

2. Device as claimed in claim 1, wherein the bursting disc (4) is mounted flush with the interior.

3. Device as claimed in claim 1 or 2, wherein the bursting disc (4) consists of metal.

4. Device as claimed in claim 1 or 2, wherein the bursting disc (4) consists of graphite.

5. Device as claimed in any of claims 1 to 4, wherein the bursting disc (4) withstands a pressure of at least 25 bars.

6. Device as claimed in any of claims 1 to 5, wherein the compressed gas line (6) is connected to the valve (7) of a compressed gas bottle (8).

## Revendications

1. Dispositif d'arrêt d'urgence de réactions de polymérisation dans des réacteurs fermés par addition d'une solution d'inhibiteur et logement d'un disque d'éclatement dans une ouverture ménagée dans le réacteur, caractérisé en ce qu'il comporte, pour recevoir la solution d'inhibiteur, une conduite coudée (5) avec une bride supérieure et une bride inférieure; en ce que l'ouverture de logement du disque d'éclatement (4) est ménagée dans le fond du réacteur (1); en ce que le bord extérieur du disque d'éclatement (4) et la bride inférieure de la conduite (5) sont en contact l'un avec l'autre et montés de manière étanche du côté extérieur du réacteur (1); et en ce que la bride supérieure de la conduite (5) est raccordée à une conduite de gaz comprimé (6) aboutissant à une source de gaz comprimé.

2. Dispositif selon la revendication 1, caractérisé en ce que le disque d'éclatement (4) est monté à fleur de l'intérieur.

3. Dispositif selon la revendication 1 ou 2, caractérisé en ce que le disque d'éclatement (4) consiste en métal.

4. Dispositif selon la revendication 1 ou 2, caractérisé en ce que le disque d'éclatement (4) consiste en graphite.

5. Dispositif selon l'une des revendications 1 à 4, caractérisé en ce que le disque d'éclatement (4) résiste à une pression d'au moins 25 bars.

6. Dispositif selon l'une des revendications 1 à 5, caractérisé en ce que la conduite de gaz comprimé (6) est raccordée à la vanne (7) d'une bouteille de gaz comprimé (8).